# EUROPÄISCHE PATENTSCHRIFT

(11) **EP 2 595 831 B1**
(45) Veröffentlichungstag und Bekanntmachung des Hinweises auf die Patenterteilung: **15.10.2014**
(21) Anmeldenummer: 11738620.1
(22) Anmeldetag: 15.07.2011
(51) Int. Cl.: B60K 11/08

(54) **KÜHLERGRILL FÜR EINEN KRAFTWAGEN**
RADIATOR GRILLE FOR A MOTOR VEHICLE
CALANDRE DU RADIATEUR POUR VÉHICULE AUTOMOBILE

(30) Priorität: 23.07.2010 DE 102010032085
(43) Veröffentlichungstag der Anmeldung: 29.05.2013
(73) Patentinhaber: Daimler AG, 70327 Stuttgart (DE)
(72) Erfinder: GÜNTHER, Alexander, 73547 Lorch (DE); OTTE, Hans-Hermann, 26316 Varel (DE)
(74) Vertreter: JENSEN & SON
(86) Internationale Anmeldenummer: PCT/EP2011/003543
(87) Internationale Veröffentlichungsnummer: WO 2012/010279

(56) Entgegenhaltungen:
- DE-A1- 10 306 158
- FR-A1- 2 404 557
- FR-A1- 2 939 371

## Beschreibung

Die Erfindung betrifft einen Kühlergrill für einen Kraftwagen, mit einem Grundträger und mit einer Mehrzahl von an dem Grundträger gehaltenen Lamellen. Die Lamellen sind aus einer jeweilige Durchtrittsöffnungen in dem Kühlergrill verschließenden Geschlossenstellung in eine die Durchtrittsöffnungen freigebende Offenstellung bewegbar.

Die DE 39 16 907 A1 beschreibt einen Kühlergrill, welcher eine Mehrzahl von um in Fahrzeugquerrichtung verlaufende Achsen schwenkbare Lamellen aufweist. Die Lamellen sind derart miteinander gekoppelt, dass mittels eines Motors durch Bewegen einer einzigen Schubstange alle Lamellen simultan um ihre Achsen verschwenkbar sind. In der Geschlossenstellung unterbinden die Lamellen eine Kühlluftzufuhr zu einem sich in Fahrtrichtung des Kraftwagens hinter dem Kühlergrill befindenden Kühler.

Ein gattungsbildender Kühlergrill ist aus der FR-A-2 939 371 bekannt.

Als nachteilig ist bei einem derartigen Kühlergrill der Umstand anzusehen, dass dieser im Hinblick auf die Gestaltung der Durchtrittsöffnungen Beschränkungen unterworfen ist.

Aufgabe der vorliegenden Erfindung ist es daher, einen Kühlergrill der eingangs genannten Art zu schaffen, welcher im Hinblick auf die Gestaltung der Durchtrittsöffnungen eine besonders große Flexibilität aufweist.

Diese Aufgabe wird durch einen Kühlergrill mit dem Merkmal des Patentanspruchs 1 gelöst. Vorteilhafte Ausgestaltungen mit zweckmäßigen Weiterbildungen der Erfindung sind in den abhängigen Patentansprüchen angegeben.

Der erfindungsgemäße Kühlergrill für einen Kraftwagen umfasst einen Grundträger und eine Mehrzahl von zumindest mittelbar an dem Grundträger gehaltenen Lamellen, welche aus einer jeweilige Durchtrittsöffnungen in dem Kühlergrill verschließenden Geschlossenstellung in eine die Durchtrittsöffnungen freigebende Offenstellung bewegbar sind. Hierbei ist wenigstens eine der Lamellen durch das Verbringen von der Geschlossenstellung in die Offenstellung in Richtung ihrer Längserstreckung verschiebbar. Dadurch kann die wenigstens eine Lamelle in der Geschlossenstellung eine Durchtrittsöffnung verschließen, welche durch einen schrägen oder gekrümmten Rand aufweist, wobei die wenigstens eine Lamelle in der Geschlossenstellung mit diesem Rand in Anlage ist. Durch das Verbrachtwerden in die Offenstellung kann hingegen die wenigstens eine Lamelle die Durchtrittsöffnung vollständig freigeben. Beim Öffnen der wenigstens einen Lamelle wird diese also gleichzeitig seitlich in eine Richtung verschoben und beim Schließen wieder in die entgegengesetzte Richtung bewegt, um dann wieder mit dem schrägen oder gekrümmten Rand der Durchtrittsöffnung in Anlage zu gelangen.

Eine solche Kinematik der wenigstens einen Lamelle ist insbesondere dann vorteilhaft, wenn der Grundträger einen Bereich für ein Markenemblem mit einer zumindest bereichsweise gekrümmten oder schrägen Außenkontur aufweist. Dann kann nämlich in der Geschlossenstellung die Lamelle unmittelbar an den Bereich für das, insbesondere runde, Markenemblem angrenzen und in der Offenstellung die bis an die Außenkontur des Markenemblems heranreichende Durchtrittsöffnung verschließen.

Durch die Lamellen, welche beim Verbrachtwerden von der Geschlossenstellung in die Offenstellung in Richtung ihrer Längserstreckung verschiebbar ist, ist es ermöglicht, Durchtrittsöffnungen mit vielerlei Formgebungen zu verschließen und in der Offenstellung der Lamellen freizugeben. Dadurch weist der Kühlergrill im Hinblick auf die Gestaltung der Durchtrittsöffnungen eine große Flexibilität auf.

In einer vorteilhaften Ausgestaltung der Erfindung sind zwei Lamellen zum Verschließen und Freigeben einer korrespondierenden Durchtrittsöffnung vorgesehen. In der Offenstellung, in welcher eine Schmalseite der Lamellen einem durch die Durchtrittsöffnung in dem Kühlergrill hindurchtretenden Luftstrom zugewandt ist, beanspruchen nämlich zwei Lamellen einen geringeren Bauraum als wenn zum Verschließen und Freigeben ein und derselben korrespondierenden Durchtrittsöffnung lediglich eine Lamelle vorgesehen wäre. Es kann so bei einer geringen Bautiefe des Kühlergrills in diesem eine vergleichsweise große Durchtrittsöffnung vorgesehen sein.

Als vorteilhaft hat es sich hierbei gezeigt, wenn durch das Bewegen einer ersten der beiden Lamellen um eine Drehachse die zweite der beiden Lamellen zwangsgesteuert um dieselbe Drehachse bewegbar ist. Es braucht dann lediglich ein Stellglied vorgesehen zu werden, um beide Lamellen simultan um die Drehachse zu bewegen.

Von Vorteil ist es weiterhin, wenn durch das Verbringen einer ersten der beiden Lamellen von der Geschlossenstellung in die Offenstellung die zweite der beiden Lamellen weiter in Richtung der Längserstreckung verschiebbar ist als die erste Lamelle. Dadurch ist es auch bei einer Durchtrittsöffnung, welche einen sich über eine vergleichsweise große Länge erstreckenden schrägen oder gekrümmten Rand aufweist, möglich, die beiden Lamellen in ihrer jeweiligen Geschlossenstellung mit diesem Rand in Anlage zu bringen. In der Offenstellung geben dann beide Lamellen auch denjenigen Bereich der Durchtrittsöffnung frei, welcher den schrägen oder gekrümmten Rand aufweist.

Besonders platzsparend lassen sich die beiden Lamellen unterbringen, wenn sie in der Offenstellung einander zumindest bereichsweise überlappend miteinander in Anlage sind.

In einer weiteren vorteilhaften Ausgestaltung der Erfindung weist der Kühlergrill zum Verbringen der wenigstens einen Lamelle von der Geschlossenstellung in die Offenstellung einen Lamellenträger auf, welcher um eine mit der Längserstreckungsrichtung der wenigstens einen Lamelle zusammenfallende Drehachse schwenkbar an dem Grundträger des Kühlergrills gehalten ist. Dann sorgt nämlich das Verschwenken des Lamellenträgers um die Drehachse dafür, dass die wenigstens eine Lamelle von einer den Luftstrom durch die Durchtrittsöffnung abschirmenden Geschlossenstellung in die Offenstellung bewegt wird, in welcher der Luftstrom auf eine Schmalseite der wenigstens einen Lamelle auftrifft.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ausschnittsweise einen Kühlergrill mit einem mittig angeordneten, runden Markenemblem, bei welchem Durchtrittsöffnungen durch den Kühlergrill jeweils mittels zweier Lamellen verschlossen sind; und
- Fig. 2: in einer Explosionsdarstellung Komponenten des Kühlergrills gemäß Fig. 1 in einer rückwärtigen Ansicht.

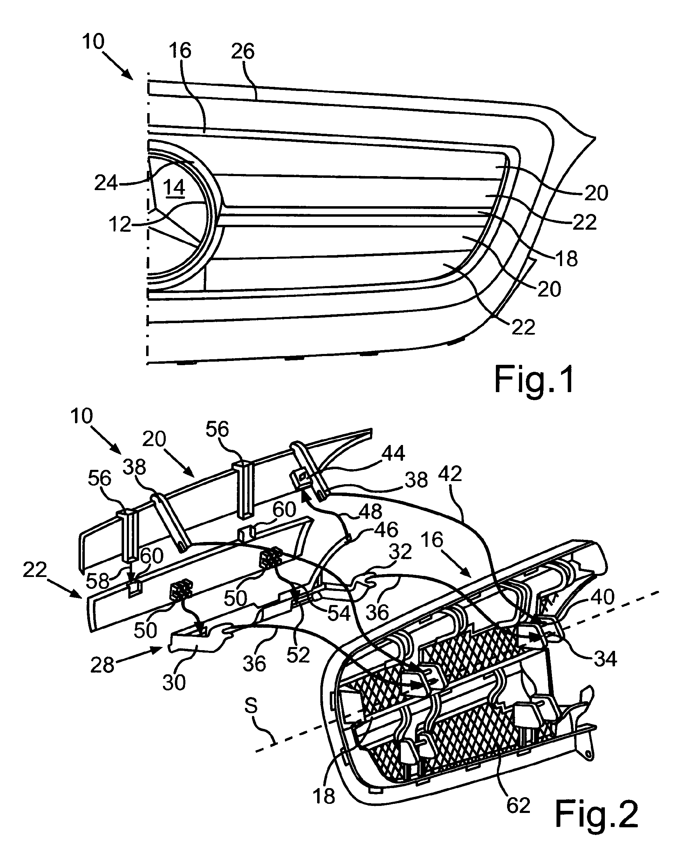

Fig. 1 zeigt ausschnittsweise und in einer Frontansicht einen Kühlergrill 10 für einen Kraftwagen, bei welchem mittig ein rundes Markenemblem 12 in einer ebenfalls runden Ausnehmung 14 eines Grundträgers 16 angeordnet ist. In dem Grundträger 16 sind durch eine starre, nicht bewegliche Sichtlamelle 18 zwei Durchtrittsöffnungen des Kühlergrills 10 voneinander abgegrenzt. Die beiden Durchtrittsöffnungen sind mittels jeweils zweier Lamellen 20, 22 verschließbar, welche in Fig. 1 in ihrer die Durchtrittsöffnungen verschließenden Geschlossenstellung gezeigt sind. Zu der Ausnehmung 14 für das Markenemblem 12 hin reichen die Durchtrittsöffnungen bis an einen die Ausnehmung 14 begrenzenden Rand 24 des Grundträgers 16 heran. Die Lamellen 20, 22 sind in ihrer Geschlossenstellung mit dem Rand 24 in Anlage. Der Grundträger 16 ist außenumfangsseitig von einem rahmenartigen Verkleidungsteil 26 umgeben.

Fig. 2 zeigt einzelne Komponenten des Kühlergrills 10, nämlich die obere Lamelle 20 und die untere Lamelle 22 sowie einen Lamellenträger 28, über welchen die Lamellen 20, 22 an dem Grundträger 16 festlegbar sind.

Der Lamellenträger 28 weist zwei Arme 30 auf, an deren Enden jeweilige Rastfugen 32 ausgebildet sind. Die beiden Rastfugen 32 sind im zusammengebauten Zustand des Kühlergrills 10 an korrespondierenden Drehlagern 34 verrastet, welche an dem Grundträger 16 bereitgestellt sind. Pfeile 36 veranschaulichen in Fig. 2 wie die Rastfugen 32 an den beiden korrespondierenden Drehlagern 34 angebracht werden. Durch die beiden Drehlager 34 ist eine Drehachse S gebildet, welche mit einer Längserstreckungsrichtung der beiden Lamellen 20, 22 zusammenfällt.

An der oberen Lamelle 20 sind ebenfalls zwei Arme 38 vorgesehen, an deren Enden jeweils eine Nut vorgesehen ist. Bei an dem Grundträger 16 festgelegtem Lamellenträger 28 umgreifen die Nuten der Arme 38 der oberen Lamelle 20 jeweilige Drehschiebelager 40, welche ebenfalls an dem Grundträger 16 bereitgestellt sind. Pfeile 42 veranschaulichen in Fig. 2 das Anbringen der Arme 38 der oberen Lamelle 20 an den beiden Drehschiebelagern 40. Die Drehschiebelager 40 sind in Bezug auf die Drehachse S exzentrisch angeordnet.

An dem rechten der beiden Arme 38 ist eine Steuerkulisse 44 angeordnet, in welche ein an dem Lamellenträger 28 bereitgestellter Steuerzapfen 46 eingreift, wenn die obere Lamelle 20 an dem Lamellenträger 28 befestigt ist. Ein entsprechender Pfeil 48 veranschaulicht das Einfädeln des Steuerzapfens 46 in die nach Art eines Rahmens ausgebildete Steuerkulisse 44 der oberen Lamelle 20. Durch die Formgebung des Steuerzapfens 46 wird bewirkt, dass beim Verschwenken des Lamellenträgers 28 um die Drehachse S die obere Lamelle 20 seitlich in Richtung der Drehachse S verschoben wird. Hierbei gleiten die an den Armen 38 vorgesehenen Nuten entlang der Drehschiebelager 40.

Die untere Lamelle 22 ist ebenfalls mittels zweier Rastelemente 50 an korrespondierenden Drehschiebelagern 52 festlegbar, welche an dem Lamellenträger 28 bereitgestellt sind. Entsprechende Pfeile 54 veranschaulichen in Fig. 2 das Anbringen der Rastelemente 50 an den beiden Drehschiebelagern 52.

Die untere Lamelle 22 ist durch das Verschwenken des Lamellenträgers 28 um die Drehachse S ebenfalls in Richtung der Drehachse S verschiebbar und zwar relativ zu der oberen Lamelle 20. Hierfür sind an der oberen Lamelle 20 zwei Führungslaschen 56 vorgesehen, welche - den in Fig. 2 gezeigten Pfeilen 58 entsprechend - in zwei Führungsnuten 60 eingebracht sind, welche an der unteren Lamelle 22 bereitgestellt sind.

Wenn die beiden Lamellen 20, 22 an dem Lamellenträger 28 befestigt sind, wird beim Verschwenken des Lamellenträgers 28 um dessen Drehachse S - und damit einhergehend beim Verbringen beider Lamellen 20, 22 in ihre Offenstellung - die untere Lamelle 22 unter die obere Lamelle 20 geschoben. In der Offenstellung überlappen dann beide Lamellen 20, 22 derart, dass ihre untere Schmalseite einem auf dem Kühlergrill 10 frontal auftreffenden Luftstrom zugewandt ist.

Dadurch, dass die beiden Lamellen 20, 22 in der Offenstellung übereinander gestapelt an dem Grundträger 16 angeordnet sind, weist dieser in Fahrzeuglängsrichtung nur eine geringe Tiefe und somit einen geringen Bauraumbedarf auf. Dennoch kann durch die beiden Lamellen 20, 22 eine jeweils vergleichsweise große Durchtrittsöffnung in dem Kühlergrill 10 verschlossen bzw. freigegeben werden. Im Bereich der Durchtrittsöffnungen sind an dem Grundträger 16 vorliegend Gitter 62 vorgesehen, welche bei in ihrer Offenstellung verbrachten Lamellen 20, 22 als Grobstoffe zurückhaltende Siebe wirken. Beim Verschwenken des Lamellenträgers 28 aus einer Stellung, in welche die Lamellen 20, 22 in ihre Geschlossenstellung verbracht sind und somit die Arme 30 nach unten weisen, in eine Endstellung, in welcher die beiden Arme 30 nach oben weisen, schieben sich die beiden Lamellen 20, 22 simultan zusammen, vollführen eine Drehbewegung auf einer Kreisbahn mit der Drehachse S als Mittelpunkt und werden gleichzeitig seitlich ausgelenkt. Durch diese Zwangsführung der Lamellen 20, 22 in einer kombinierten Dreh-Schwenk- und Schiebebewegung ist es ermöglicht, dass die Lamellen 20, 22 das in der Mitte des Kühlergrills 10 sich befindende runde Markenemblem 12 in der Geschlossenstellung außen umfangseitig umgeben, wobei sie in ihrer Offenstellung große Durchtrittsöffnungen in dem Kühlergrill 10 freigeben.

## Patentansprüche

1. Kühlergrill für einen Kraftwagen, mit einem Grundträger (16), der einen Bereich (14) mit einer zumindest bereichsweise gekrümmten oder schrägen Außenkontur aufweist, und mit einer Mehrzahl von an dem Grundträger (16) gehaltenen Lamellen (20, 22), welche aus einer jeweilige Durchtrittsöffnungen in dem Kühlergrill (10) verschließenden Geschlossenstellung in eine die Durchtrittsöffnungen freigebende Offenstellung bewegbar sind,
**dadurch gekennzeichnet, dass**
wenigstens eine der Lamellen (20, 22) durch das Verbringen von der Geschlossenstellung in die Offenstellung in Richtung ihrer Längserstreckung (S) verschiebbar ist.

2. Kühlergrill nach Anspruch 1,
**gekennzeichnet durch**
zwei Lamellen (20, 22) zum Verschließen und Freigeben einer korrespondierenden Durchtrittsöffnung.

3. Kühlergrill nach Anspruch 2,
**dadurch gekennzeichnet, dass**
durch das Bewegen einer ersten der beiden Lamellen (20) um eine Drehachse (S) die zweite der beiden Lamellen (22) zwangsgesteuert um dieselbe Drehachse (S) bewegbar ist.

4. Kühlergrill nach Anspruch 2 oder 3,
**dadurch gekennzeichnet, dass**
durch das Verbringen einer ersten der beiden Lamellen (20) von der Geschlossenstellung in die Offenstellung die zweite der beiden Lamellen (22) weiter in Richtung der Längserstreckung (S) verschiebbar ist als die erste Lamelle (20).

5. Kühlergrill nach einem der Ansprüche 2 bis 4,
**dadurch gekennzeichnet, dass**
in der Offenstellung die beiden Lamellen (20, 22) einander zumindest bereichsweise überlappend miteinander in Anlage sind.

6. Kühlergrill nach einem der Ansprüche 2 bis 5,
**dadurch gekennzeichnet, dass**
an der ersten der beiden Lamellen (20) wenigstens eine Führungslasche (56) bereitgestellt ist, welche mit einer an der zweiten der beiden Lamellen (22) bereitgestellten Führungsnut (60) in Eingriff ist.

7. Kühlergrill nach einem der Ansprüche 1 bis 6,
**gekennzeichnet durch**
einen Lamellenträger (28) zum Verbringen der wenigstens einen Lamelle (20, 22) von der Geschlossenstellung in die Offenstellung, welcher um eine mit der Längserstreckungsrichtung (S) der wenigstens einen Lamelle (20, 22) zusammenfallende Drehachse (S) schwenkbar an dem Grundträger (16) des Kühlergrills (10) gehalten ist.

8. Kühlergrill nach Anspruch 7,
**gekennzeichnet durch**
wenigstens ein an dem Grundträger (16) exzentrisch zu der Drehachse (S) ausgebildetes Drehschiebelager (40) für die wenigstens eine Lamelle (20).

9. Kühlergrill nach Anspruch 7 oder 8,
**gekennzeichnet durch**
einen an dem Lamellenträger (28) bereitgestellten Steuerzapfen (46), welcher mit einer an der wenigstens einen Lamelle (20) bereitgestellten Steuerkulisse (44) in Eingriff ist.

10. Kühlergrill nach einem der Ansprüche 2 bis 6 und einem der Ansprüche 7 bis 9,
**gekennzeichnet durch**
wenigstens ein an dem Lamellenträger (28) bereitgestelltes Drehschiebelager (52), an welchem die zweite der beiden Lamellen (22) gehalten ist.

## Claims

1. Radiator grille for a motor vehicle, comprising a base support (16) having a section (14) with a curved or inclined external contour in at least some regions, and further comprising a plurality of fins (20, 22) which are held on the base support (16) and which can be moved from a closed position blocking respective through-openings in the radiator grille (10) into an open position clearing the through-openings,
**characterised in that**
at least one of the fins (20, 22) can be displaced in the direction of its longitudinal dimension (S) by being moved from the closed position into the open position.

2. Radiator grille according to claim 1,
**characterised by**
two fins (20, 22) for closing and opening a corresponding through-opening.

3. Radiator grille according to claim 2,
**characterised in that**
by moving a first of the two fins (20) about an axis of rotation (S), the second of the two fins (22) can be forcibly moved about the same axis of rotation (S).

4. Radiator grille according to claim 2 or 3,
**characterised in that**
by moving a first of the two fins (20) from the closed position into the open position, the second of the two fins (22) can be displaced further in the direction of the longitudinal dimension (S) than the first fin (20).

5. Radiator grille according to any of claims 2 to 4,
**characterised in that**
in the open position, the two fins (20, 22) are in overlapping contact with one another at least in some regions.

6. Radiator grille according to any of claims 2 to 5,
**characterised in that**
at least one guide tab (56) in engagement with a guide grove provided on the second of the two fins (22) is provided on the first of the two fins (20).

7. Radiator grille according to any of claims 2 to 6,
**characterised by**
a fin support (28) for moving the at least one fin (20, 22) from the closed position into the open position, which fin support (28) is held on the base support (16) of the radiator grille (10) while being capable of pivoting about an axis of rotation (S) which coincides with the direction of the longitudinal dimension (S) of the at least one fin (20, 22).

8. Radiator grille according to claim 7,
**characterised by**
at least one sliding pivot bearing (40) formed on the base support (16) in a position eccentric relative to the axis of rotation (S) for the at least one fin (20).

9. Radiator grille according to claim 7 or 8,
**characterised by**
a control pin (46) which is provided on the fin support (28) and which is in engagement with a control gate (44) provided on the at least one fin (20).

10. Radiator grille according to any of claims 1 to 6 and any of claims 7 to 9,
**characterised by**
at least one sliding pivot bearing (52) provided on the fin support (28), on which sliding pivot bearing (52) the second of the two fins (22) is held.

## Revendications

1. Calandre pour un véhicule à moteur, comportant un support de base (16) qui présente une zone (14) dont le pourtour extérieur est courbé ou incliné au moins par endroits, et une pluralité de lamelles (20, 22) maintenues sur le support de base (16) qui peuvent être déplacées d'une position de fermeture dans laquelle des ouvertures de passage respectives de la calandre (10) sont fermées, à une position d'ouverture dans laquelle les ouvertures de passage sont ouvertes, **caractérisée en ce qu'**au moins l'une des lamelles (20, 22) peut être amenée à coulisser dans la direction de son extension longitudinale (S) par passage de la position de fermeture à la position d'ouverture.

2. Calandre selon la revendication 1, **caractérisée par** deux lamelles (20, 22) destinées à la fermeture et à l'ouverture d'une ouverture de passage correspondante.

3. Calandre selon la revendication 2, **caractérisée en ce que** par le mouvement d'une première lamelle parmi les deux lamelles (20) autour d'un axe de rotation (S) la seconde des deux lamelles (22) peut être déplacée autour du même axe de rotation (S) de manière guidée.

4. Calandre selon la revendication 2 ou la revendication 3, **caractérisée en ce que** par le passage d'une première lamelle parmi les deux lamelles (20) d'une position de fermeture à une position d'ouverture la seconde des deux lamelles (22) peut être déplacée plus loin dans la direction de son extension longitudinale (S) que la première lamelle (20).

5. Calandre selon l'une quelconque des revendications 2 à 4, **caractérisée en ce que** dans la position ouverture, les deux lamelles (20, 22) prennent appui l'une sur l'autre au moins en se chevauchant partiellement.

6. Calandre selon l'une quelconque des revendications 2 à 5, **caractérisée en ce que** sur la première des deux lamelles (20) est disposée au moins une patte de guidage (56), laquelle est en prise avec une rainure de guidage (60) disposée sur la seconde des deux lamelles (22).

7. Calandre selon l'une quelconque des revendications 1 à 6, **caractérisée par** un support de lamelles (28) destiné à déplacer l'au moins une lamelle (20, 22) de la position de fermeture à la position d'ouverture, laquelle est maintenue pivotante sur le support de base (16) de la calandre (10) autour d'un axe de rotation (S) coïncidant avec la direction d'extension longitudinale (S) de l'au moins une lamelle (20, 22).

8. Calandre selon la revendication 7, **caractérisée par** au moins un palier tournant (40) conçu de manière excentrique par rapport à l'axe de rotation (S) sur le support de base (16) pour l'au moins une lamelle (20).

9. Calandre selon la revendication 7 ou la revendication 8, **caractérisée par** un tenon de commande (46) disposé sur le support de lamelles (28), lequel est en prise avec une coulisse de commande (44) disposée sur l'au moins une lamelle (20).

10. Calandre selon la revendication 2 à 6 et selon l'une quelconque des revendications 7 à 9, **caractérisée par** au moins un palier tournant (52) disposé sur le support de lamelles (28), sur lequel la seconde des deux lamelles (22) est fixée.
